# EUROPÄISCHE PATENTSCHRIFT

(11) **EP 3 831 652 B1**
(45) Veröffentlichungstag und Bekanntmachung des Hinweises auf die Patenterteilung: **20.09.2023**
(21) Anmeldenummer: 20211388.2
(22) Anmeldetag: 02.12.2020
(51) Int. Cl.: B60P 3/34, B60P 3/36

(54) **VORRICHTUNG ZUR VERGRÖSSERUNG EINES RAUMES IM INNEREN EINES CAMPINGFAHRZEUGES**
DEVICE FOR ENLARGING A ROOM INSIDE A CAMPING VEHICLE
DISPOSITIF POUR AGRANDIR UNE PIÈCE À L'INTÉRIEUR D'UN VÉHICULE DE CAMPING

(30) Priorität: 03.12.2019 DE 102019132902
(43) Veröffentlichungstag der Anmeldung: 09.06.2021
(73) Patentinhaber: Erwin Hymer Group SE, 88339 Bad Waldsee (DE)
(72) Erfinder: Buck, Rainer, 88239 Wangen i. Allgäu (DE); Metzler, Marcus, 88339 Bad Waldsee (DE); Dorn, Günter, 88282 Schlier (DE)
(74) Vertreter: Waller, Stefan

(56) Entgegenhaltungen:
- EP-A1- 3 418 125
- DE-U1-202015 100 258
- US-A- 4 192 543
- US-A- 5 421 633

## Beschreibung

Die Erfindung betrifft eine Vorrichtung zur Vergrößerung eines Raumes im Inneren eines Freizeitfahrzeugs, insbesondere Campingfahrzeuges sowie ein Campingfahrzeug mit einer solchen Vorrichtung, einen Raum im Innern eines Campingfahrzeugs mit einer solchen Vorrichtung sowie ein Campingfahrzeug mit einer solchen Vorrichtung.

Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil oder Freizeitmobil. Ein Wohnwagen kann zum Beispiel alternativ als Caravan oder Campinganhänger bezeichnet werden. Campingfahrzeuge werden alternativ auch Freizeitfahrzeugen genannt.

Etwas weitergehend ist hier der Begriff des Freizeitfahrzeugs, worunter ein Fahrzeug verstanden werden soll, dass auch zu Camping- und Wohnzwecken verwendet werden kann, jedoch flexibler ist und auch ansonsten für andere Einsatzzwecke genutzt wird, beispielsweise wenn Einrichtungen für das Camping teilweise entnommen werden. Ein Beispiel hierfür ist der VW-Bus, der durch Zusatzeinrichtungen auch hilfsweise zum Camping verwendet wird.

Im Stand der Technik sind insbesondere Zelte bekannt, bei denen eine rechteckige Seite des Zeltes mithilfe von zwei sich kreuzenden jeweils in gegenüberliegenden Ecken befestigten Stäben nach außen gedrückt wird, um den Raum zu vergrößern. Außerdem ist auch ein Freizeitfahrzeug mit einer Vorrichtung zur Vergrößerung einer Nasszelle aus EP 3 418 125 A1 bekannt.

Eine Aufgabe der vorliegenden Erfindung liegt darin, den Stand der Technik zu verbessern. Es ist insbesondere eine Aufgabe der Erfindung, Räume in Inneren von Freizeitfahrzeugen, insbesondere Campingfahrzeugen, welche in der Regel klein und eng geschnitten sind, temporär und reversibel zu vergrößern.

Diese Aufgabe wird durch eine Vorrichtung zur Vergrößerung eines Raumes mit den Merkmalen des unabhängigen Patentanspruchs 1 gelöst. Vorteilhafte Weiterbildungen der Erfindung sind in den Unteransprüchen angegeben.

Mithilfe der Vorrichtung zur Vergrößerung eines Raumes kann ein Volumeninhalt eines Raumes im Inneren eines Freizeitfahrzeugs, insbesondere Campingfahrzeugs zeitweise und reversibel vergrößert werden.

Bevorzugt kann der Raum im Inneren des Freizeitfahrzeugs auch an einem Rand des Freizeitfahrzeugs, d. h. an eine Außenwand, angrenzen. In diesem Fall ist ein Teil der Außenwand ein Teil des Raumes. Zu einem solchen Raum werden mindestens eine Wand und bevorzugt ein Boden und eine Decke gezählt. Die erste Wand des Raumes kann hierbei eine Außenwand des Freizeitfahr- bzw. Campingfahrzeugs oder eine andere Wand im Inneren des Freizeitfahr- bzw. Campingfahrzeugs sein.

An einem unteren Ende der Wandfläche der ersten Wand ist die Wandfläche so angelenkt, dass diese um eine horizontale Achse geschwenkt werden kann. Bevorzugt verläuft die horizontale Achse parallel zur Unterseite der Wandfläche.

Hierbei wird unter einer Türfüllung derjenige Teil einer Tür verstanden, welcher sich innerhalb des Türrahmens befindet.

Die Türfüllung weist bevorzugt ein Kunststoffmaterial auf oder besteht aus einem solchen.

Bevorzugt hat die Türfüllung einen insbesondere rechteckigen Rand, welcher in einem insbesondere rechteckigen Türrahmen befestigt oder gelagert ist. Bevorzugt ist die Oberfläche der Türfüllung größer als die Fläche, in der die Türfüllung gelagert ist. Falls die Türfüllung eine Steifigkeit aufweist, welche größer als ein vorgegebener Wert ist, so bewirkt dies, dass sich die Türfüllung entweder auf einer oder auf der anderen Seite der Ebene des Türrahmens befindet. In der ersten oder zweiten Stellung kann die Oberfläche der Türfüllung oberhalb bzw. unterhalb der Ebene des Türrahmens durch eine Funktion beschrieben werden, bei der die erste Ableitung von f(x) immer positiv oder immer negativ ist, wobei x in der Ebene des Türrahmens als Koordinate die Breite definiert. Die Krümmung in der Schnittebene der Breite des Türrahmens ist bei der Türfüllung immer positiv oder immer negativ in der ersten oder zweiten Stellung.

Ein Kerngedanke der Erfindung besteht darin, dass zum einen mithilfe einer kippbaren Wandfläche und zum anderen mithilfe einer flexiblen Türfüllung, welche an unterschiedlichen Wänden oder Wandseiten eines Raumes angeordnet sind, dieser Raum temporär und reversibel vergrößert werden kann.

Falls die Türfüllung vom Raum weg gebogen ist, so wird vorteilhafterweise eine Raumvergrößerung des betreffenden Raumes erzielt. Im gegenteiligen Fall, wonach die Türfüllung in den Raum hineingebogen ist, so wird vorteilhafterweise erreicht, dass der an den Raum angrenzende Raum, welcher zum Beispiel ein Wohnbereich sein kann, entsprechend vergrößert ist.

Die durch die vorliegende Erfindung erzielte Vergrößerung des Raumes ist im oberen Bereich des Raumes größer als im unteren Bereich des Raumes. Der so gewonnene Raum kann somit für einen Körper, welcher im Schulterbereich breit ist bzw. aufgrund der Aktivität der Hände mehr Raum benötigt und im Bereich der Füße schmal ist, ideal genutzt werden.

Gemäß der Erfindung weist die Türfüllung eine Bistabilität auf, welche durch die erste Stellung und die zweite Stellung gegeben ist. Dies bedeutet, dass die Türfüllung nur in diesen beiden Stellungen stabil ist. Der Fachmann versteht, dass es um die erste oder zweite Stellung einen gewissen Bereich gibt, welche ebenfalls stabil ist. Falls jedoch die Türfüllung sich außerhalb dieser Bereiche befindet, so wird sie entweder die erste oder die zweite Stellung einnehmen.

Die Türfüllung weist bevorzugt hartes Kunststoffmaterial mit einer Mindestdicke auf, sodass benachbarte Stellen in der Türfüllung eine ähnliche Wölbung aufweisen.

Gemäß einer weiteren Ausführungsform liegen sich die erste Wand und die zweite Wand des Raumes gegenüber. Dies hat den Vorteil, dass die Raumerweiterung entlang einer vorgegebenen Richtung eine möglichst große Vergrößerung erzielt.

Es ist weiterhin bevorzugt, dass eine Außenkante der Wandfläche und ein Abschnitt des Raumes, welcher bei nicht gekippter Wandfläche angrenzend zur Außenkante der Wandfläche ist, durch ein insbesondere flexibles Material verbunden sind, so dass der Raum bei gekippter Wandfläche von dem Material und der Wandfläche verschlossen ist. Hierdurch wird vorteilhafterweise erreicht, dass die seitlichen Öffnungen, welche durch das Ausklappen bzw. Kippen der ersten Wand entstehen, verschlossen werden. Dies kann bevorzugt mittels Falttechnik, insbesondere Aluminium-Falttechnik, Stoff oder Luftexpansionstechnik erreicht werden. Dabei soll unter Falttechnik ganz allgemein eine durch Faltung expandierbare Seitenwand verstanden werden. Insbesondere können dies leichte Aluminiumelemente sein, die gefaltet werden. Unter Luftexpansionstechnik sollen aufblasbare Balge verstanden werden, insbesondere um die drei Seiten über der Scharnierkante umlaufende Balge. Ebenso sind auch mit Luft aufblasbare Dropstich-Elemente denkbar.

Falls die erste Wand des Raumes eine Außenwand des Campingfahrzeugs ist, so kann der Abschnitt des Raumes, welcher bei nicht gekippter Wandfläche angrenzend zur Außenkante der Wandfläche ist, ein rahmenförmiger Bereich der Außenwand sein, welcher sich bevorzugt außen um die Außenkante der Wandfläche befindet.

Bevorzugt ist von der Außenkante die untere Kante der Wandfläche ausgenommen, da dort die horizontale Achse verläuft, um die gekippt wird.

Gemäß noch einer weiteren Ausführungsform weist die Tür ferner eine flexible Türdichtung auf, welche die Tür zwischen einem unteren Ende der Türfüllung und einem unteren Teil des Türrahmens abdichtet. Hierdurch wird vorteilhafterweise ein Luftzug durch die Tür verhindert.

Bevorzugt ist der Winkel der Wandfläche der ersten Wand zwischen der ersten Stellung und der zweiten Stellung kleiner als 20°. Besonders bevorzugt ist dieser Winkel kleiner als 15°.

Gemäß noch einer weiteren, bevorzugten Ausführungsform ist der Raum eine Dusche, ein Schrank, insbesondere ein Kleiderschrank oder ein Stauschrank, oder eine Toilette.

In einem weiteren Aspekt wird die Erfindung gelöst durch einen Raum im Innern eines Freizeitfahrzeugs, insbesondere Campingfahrzeugs, welcher eine oben genannte Vorrichtung aufweist.

In noch einem weiteren Aspekt wird die Aufgabe der Erfindung gelöst durch ein Freizeit-, insbesondere Campingfahrzeug, welches eine oben genannte Vorrichtung oder einen Raum mit einer solchen Vorrichtung aufweist.

Ausführungsbeispiele der Erfindung sind in den Zeichnungen dargestellt und werden in der nachfolgenden Beschreibung näher erläutert. Dabei zeigen
- Fig. 1: ein Freizeitfahrzeug in Form eines Campingfahrzeugs mit einer Vorrichtung zur Vergrößerung eines Raumes gemäß einer Ausführungsform der Erfindung,
- Fig. 2: eine Vorrichtung zur Vergrößerung eines Raumes im Inneren eines Campingfahrzeuges gemäß einer Ausführungsform der Erfindung und
- Fig. 3, 4, 5 und 6: jeweils Vorrichtungen zur Vergrößerung eines Raumes im Inneren eines Campingfahrzeuges gemäß Ausführungsformen der Erfindung, wobei die Vorrichtungen unterschiedliche Stellungen einer Wandfläche und einer Türfüllung zeigen.

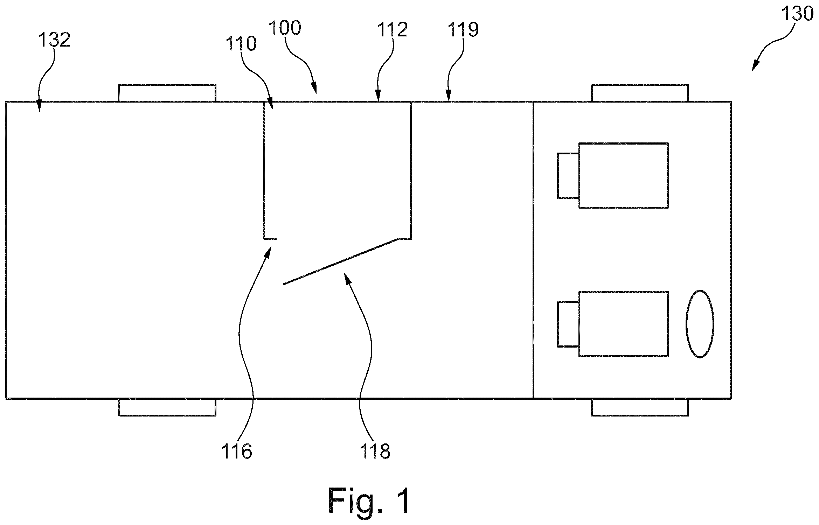

Die Fig. 1 zeigt ein Campingfahrzeug 130, in dessen Innerem 132 eine Vorrichtung 100 zur Vergrößerung eines Raumes 110 angeordnet ist. Der Raum 110, welche vorliegend die Funktion einer Dusche bzw. Bad erfüllt, hat vier Wände, unter anderem eine erste Wand 112, welcher Teil einer Außenwand 119 des Campingfahrzeugs 130 ist, und eine der ersten Wand 112 gegenüberliegende zweite Wand 116, wobei die zweite Wand 116 eine Tür 118 aufweist.

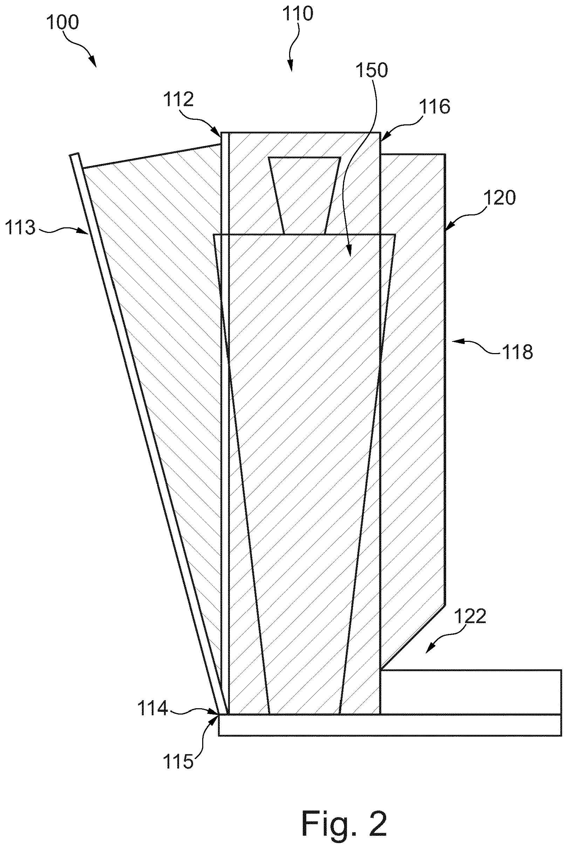

Die Fig. 2 zeigt die Vorrichtung 100 zur Vergrößerung des Raumes 110 in einer seitlichen Schnittansicht. In dieser Schnittansicht sieht man auf der linken Seite die erste Wand 112 und auf der rechten Seite die der ersten Wand 112 gegenüberliegende zweite Wand 116. Die Wandfläche 113 der ersten Wand 112 ist hierbei als eine kippbare Wand realisiert, welche dieselbe Höhe aufweist wie der Raum 110. In der Ansicht der Figur 2 ist die Wandfläche 113 in gekippter Form dargestellt. Hierbei ist die Wandfläche 113 gegenüber der Vertikalen um eine an der Unterseite 114 der Wandfläche 113 angeordnete, horizontale Achse 115 um einen Winkel von 15° gekippt. Die zweite Wand 116 hat eine Tür 118, welche eine flexible Türfüllung 120 aufweist, welche zwei bistabile Stellungen einnehmen kann und in der Ansicht der Figur 2 vom Raum 110 nach außen gewölbt ist. Die Tür 118 wird zwischen einem unteren Ende der Türfüllung 120 und einem unteren Teil des Türrahmens mittels einer flexiblen Türdichtung 122 abgedichtet.

Im Inneren der Vorrichtung 100 ist die Silhouette eines Benutzers 150 der Vorrichtung 100 bzw. des Raumes 110 gezeichnet, welche insbesondere in der Schulterpartie des Benutzers 150 deutlich zeigt, dass der Raum 110 ohne die durch die Vorrichtung 100 erzielte Vergrößerung zu klein für den Benutzer 150 ist, jedoch mit der Vergrößerung dem Benutzer 150 genügend Raum zur Benutzung bietet.

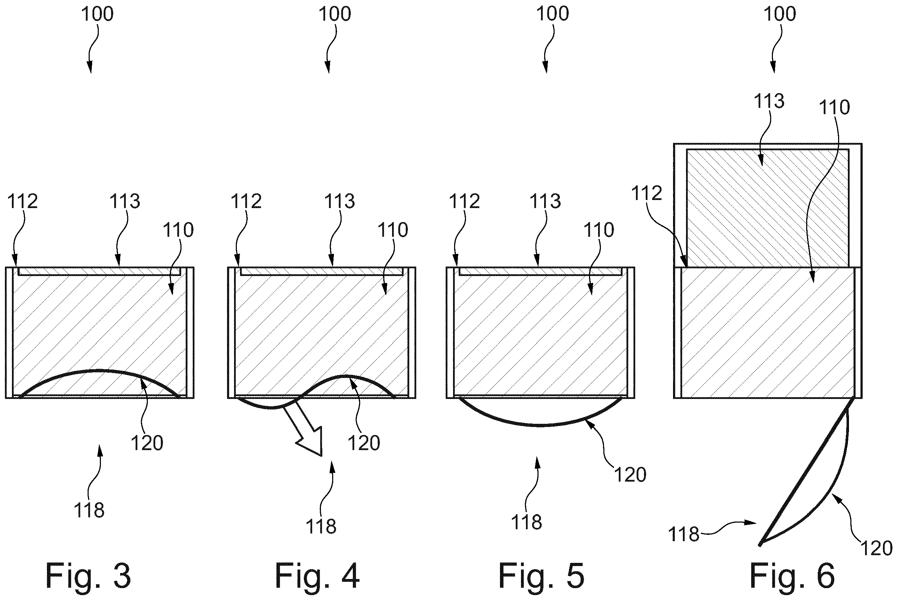

Die Fig. 3 zeigt die Vorrichtung 100 zur Vergrößerung des Raumes 110 in einer Aufsicht. In der Darstellung der Figur 3 ist auf einer oberen Seite die erste Wand 112 und an einer unteren Seite die zweite Wand 118 abgebildet. Die Figuren 4, 5 und 6 haben ähnliche Darstellungen.

In den Fig. 3, 4 und 5 ist die Wandfläche 113 der ersten Wand 112 jeweils im nicht gekippten Zustand abgebildet. In Figur 6 erkennt man, dass die Wandfläche 113 gegenüber der Vertikalen, welche in der Ansicht der Figuren 3 bis 6 aus der Zeichenebene heraus zeigt, gekippt ist.

In Fig. 3 ist die Türfüllung 120 der Tür 118 in den Raum 110 hinein gewölbt. In Figur 5 ist die Türfüllung 120 der Tür 118 vom Raum 110 weg gewölbt. In Figur 4 sieht man, wie die Türfüllung 120 vom Zustand der Figur 3, wo sie in den Raum 110 hineingewölbt ist, zum Zustand der Figur 5 gebracht wird, wo sie vom Raum 110 weg gewölbt ist.

Dies wird bewerkstelligt, indem der linke Teil der Türfüllung 120 entlang der Pfeilrichtung vom Raum 110 weg gezogen wird. In Figur 6 ist die Tür 118 geöffnet und die Türfüllung 120 von der Tür 118 nach außen weg gewölbt.

## Patentansprüche

1. Vorrichtung (100) zur Vergrößerung eines Raumes (110) im Inneren (132) eines Freizeitfahrzeugs, insbesondere Campingfahrzeuges (130), aufweisend:
eine zweite Wand (116) des Raumes (110), welche eine Tür (118) mit flexibler Türfüllung (120) aufweist,
wobei die Türfüllung (120) zwischen einer ersten Stellung und einer zweiten Stellung bewegbar ist; und
wobei die Türfüllung (120) in der ersten Stellung vom Raum (110) weg gebogen ist und in der zweiten Stellung in den Raum (110) hinein gebogen ist.
**dadurch gekennzeichnet, dass**
die Türfüllung (120) eine Bistabilität aufweist, welche durch die erste Stellung und die zweite Stellung gegeben ist.

2. Vorrichtung nach Anspruch 1,
**dadurch gekennzeichnet, dass**
diese eine Wandfläche (113) einer ersten Wand (112) des Raumes (110) aufweist, welche an einem unteren Ende (114) um eine horizontale Achse (115) so angelenkt ist, dass die Wandfläche (113) zwischen einer vertikalen ersten Stellung und einer zweiten Stellung, in welcher die Wandfläche (113) von einer Mitte des Raumes (110) weggekippt ist, bewegbar ist;

3. Vorrichtung (100) nach Anspruch 1 oder 2,
**dadurch gekennzeichnet, dass**
die erste Wand (112) und die zweite Wand (116) des Raumes (110) sich gegenüberliegen.

4. Vorrichtung (100) nach einem der beiden vorangegangen Ansprüche,
**dadurch gekennzeichnet, dass**
die Wandfläche (113) die Funktion einer Tür, einer Klappe oder eines Wandpanel aufweist.

5. Vorrichtung (100) nach einem der beiden vorangegangen Ansprüche,
**dadurch gekennzeichnet, dass**
eine Außenkante der Wandfläche (113) und ein Abschnitt des Raumes (110), welcher bei nicht gekippter Wandfläche (113) angrenzend zur Außenkante der Wandfläche (113) ist, durch ein insbesondere flexibles Material verbunden sind, so dass der Raum (110) bei gekippter Wandfläche (113) von dem Material und der Wandfläche (113) verschlossen ist.

6. Vorrichtung (100) nach einem der vorangegangen Ansprüche,
**dadurch gekennzeichnet, dass**
die Tür (118) ferner eine flexible Türdichtung (122) aufweist, welche die Tür (118) zwischen einem unteren Ende der Türfüllung (120) und einem unteren Teil des Türrahmens abdichtet.

7. Vorrichtung (100) nach einem der vorangegangen Ansprüche,
**dadurch gekennzeichnet, dass**
der Winkel der ersten Wand (112) zwischen der ersten Stellung und der zweiten Stellung kleiner als 20° ist.

8. Vorrichtung (100) nach einem der vorangegangen Ansprüche,
**dadurch gekennzeichnet, dass**
der Raum (110) eine Dusche, ein Schrank, insbesondere ein Kleiderschrank oder ein Stauschrank, oder eine Toilette ist.

9. Vorrichtung (100) nach einem der vorangegangen Ansprüche,
**dadurch gekennzeichnet, dass**
die erste Wand (112) des Raumes (110) eine Außenwand des Freizeitfahrzeugs bzw. Campingfahrzeugs (130) ist.

10. Freizeitfahrzeug, insbesondere Campingfahrzeug (130), mit einer Vorrichtung (100) nach einem der vorhergehenden Ansprüche.

## Claims

1. Device (100) for enlarging a space (110) in the interior (132) of a recreational vehicle, in particular camping vehicle (130), having:
a second wall (116) of the space (110), which has a door (118) with a flexible door panel (120);
wherein the door panel (120) is movable between a first position and a second position; and
wherein the door panel (120) in the first position is curved away from the space (110), and in the second position is curved into the space (110),
**characterized in that**
the door panel (120) has a bistability which is provided by the first position and the second position.

2. Device according to Claim 1,
**characterized in that**
said device has a wall surface (113) of a first wall (112) of the space (110), which at a lower end (114) is articulated about a horizontal axis (115) such that the wall surface (113) is movable between a vertical first position and a second position in which the wall surface (113) is tilted away from a centre of the space (110).

3. Device (100) according to Claim 1 or 2,
**characterized in that**
the first wall (112) and the second wall (116) of the space (110) lie opposite one another.

4. Device (100) according to either of the two preceding claims,
**characterized in that**
the wall surface (113) has the function of a door, of a flap, or of a wall panel.

5. Device (100) according to either of the two preceding claims,
**characterized in that**
an external edge of the wall surface (113) and a portion of the space (110), which is adjacent to the external edge of the wall surface (113) when the wall surface (113) is not tilted, are connected by an in particular flexible material such that the space (110) is closed by the material and the wall surface (113) when the wall surface (113) is tilted.

6. Device (100) according to one of the preceding claims,
**characterized in that** the door (118) furthermore has a flexible door seal (122) which seals the door (118) between a lower end of the door panel (120) and a lower part of the door frame.

7. Device (100) according to one of the preceding claims,
**characterized in that**
the angle of the first wall (112) between the first position and the second position is less than 20°.

8. Device (100) according to one of the preceding claims,
**characterized in that**
the space (110) is a shower, a cupboard, in particular a wardrobe or a storage cupboard, or a toilet.

9. Device (100) according to one of the preceding claims,
**characterized in that**
the first wall (112) of the space (110) is an external wall of the recreational vehicle or camping vehicle (130), respectively.

10. Recreational vehicle, in particular camping vehicle (130), having a device (100) according to one of the preceding claims.

## Revendications

1. Dispositif (100) pour agrandir un espace (110) à l'intérieur (132) d'un véhicule de loisirs, en particulier d'un véhicule de camping (130), comprenant :
une deuxième paroi (116) de l'espace (110), qui présente une porte (118) avec un panneau de porte flexible (120),
le panneau de porte (120) étant mobile entre une première position et une deuxième position ; et
le panneau de porte (120) étant, dans la première position, fléchi à l'écart de l'espace (110) et étant, dans la deuxième position, fléchi vers l'intérieur de l'espace (110),
**caractérisé en ce que**
le panneau de porte (120) présente une bistabilité qui est donnée par la première position et la deuxième position.

2. Dispositif selon la revendication 1,
**caractérisé**
**en ce qu'**il comprend une surface de paroi (113) d'une première paroi (112) de l'espace (110) qui est articulée à une extrémité inférieure (114) autour d'un axe horizontal (115) de manière à ce que la surface de paroi (113) soit mobile entre une première position verticale et une deuxième position dans laquelle la surface de paroi (113) est apte à être déplacée à l'écart d'un centre de l'espace (110).

3. Dispositif (100) selon la revendication 1 ou 2,
**caractérisé en ce que**
la première paroi (112) et la deuxième paroi (116) de l'espace (110) sont opposées l'une à l'autre.

4. Dispositif (100) selon l'une des deux revendications précédentes,
**caractérisé en ce que**
la surface de paroi (113) a la fonction d'une porte, d'une trappe ou d'un panneau de paroi.

5. Dispositif (100) selon l'une des deux revendications précédentes,
**caractérisé en ce que**
un bord extérieur de la surface de paroi (113) et une partie de l'espace (110) qui est adjacente au bord extérieur de la surface de paroi (113) lorsque la surface de paroi (113) n'est pas inclinée, sont reliés par un matériau notamment flexible, de sorte que l'espace (110) est fermé par le matériau et la surface de paroi (113) lorsque la surface de paroi (113) est basculée.

6. Dispositif (100) selon l'une quelconque des revendications précédentes,
**caractérisé en ce que**
la porte (118) comprend en outre un joint flexible (122) de porte qui assure l'étanchéité de la porte (118) entre une extrémité inférieure du panneau de porte (120) et une partie inférieure du cadre de porte.

7. Dispositif (100) selon l'une quelconque des revendications précédentes,
**caractérisé en ce que**
l'angle de la première paroi (112) entre la première position et la deuxième position est inférieur à 20°.

8. Dispositif (100) selon l'une quelconque des revendications précédentes,
**caractérisé en ce que**
l'espace (110) est une douche, une armoire, notamment une armoire à vêtements ou une armoire de rangement, ou des toilettes.

9. Dispositif (100) selon l'une des revendications précédentes,
**caractérisé en ce que**
la première paroi (112) de l'espace (110) est une paroi extérieure du véhicule de loisirs ou du véhicule de camping (130).

10. Véhicule de loisir, notamment de camping (130), comportant un dispositif (100) selon l'une quelconque des revendications précédentes.
